## Europäisches Patentamt
## European Patent Office
## Office européen des brevets

(19)

(11) Veröffentlichungsnummer: **0 155 001**
**B1**

(12)  # EUROPÄISCHE PATENTSCHRIFT

(45) Veröffentlichungstag der Patentschrift:
02.08.89

(51) Int. Cl.⁴: **H 04 L 25/38**, H 04 L 5/14

(21) Anmeldenummer: **85102960.3**

(22) Anmeldetag: **14.03.85**

(54) **Verfahren zum Umsteuern der Übertragungsgeschwindigkeit in einem mit zwei voneinander verschiedenen Übertragungsgeschwindigkeiten betreibbaren Datenüberstragungssystem.**

(30) Priorität: **16.03.84 DE 3409781**

(43) Veröffentlichungstag der Anmeldung:
**18.09.85 Patentblatt 85/38**

(45) Bekanntmachung des Hinweises auf die Patenterteilung:
**02.08.89 Patentblatt 89/31**

(84) Benannte Vertragsstaaten:
**CH DE FR LI NL**

(56) Entgegenhaltungen:
**GB-A-1 020 976**
**US-A-3 534 264**
**US-A-4 320 520**

(73) Patentinhaber: **Siemens Aktiengesellschaft Berlin und München, Wittelsbacherplatz 2, D-8000 München 2 (DE)**

(72) Erfinder: **Fischer, Günter, Fischlstrasse 4, D-8000 München 50 (DE)**

**Beschreibung**

Die Erfindung bezieht sich auf ein Verfahren zum Umsteuern der Übertragungsgeschwindigkeit in einem mit zwei voneinander verschiedenen Übertragungsgeschwindigkeiten betreibbaren Datenübertragungssystem, welches zwei miteinander verbundene Datenübertragungseinrichtungen, insbesondere Modems, umfaßt.

Die vorstehend erwähnte Verfahrensweise ist im Zusammenhang mit der CCITT-Empfehlung V.22 bis bereits als eine Verfahrensweise bekannt, die im Zuge des Aufbaus einer Verbindung zwischen zwei Datenübertragungseinrichtungen durchgeführt wird. Nach der betreffenden CCITT-Empfehlung existiert jedoch keine Möglichkeit dafür, im Zuge einer bestehenden Verbindung zwischen zwei Datenübertragungseinrichtungen - zwischen denen eine Datenübertragung entweder mit einer niedrigen oder mit einer hohen Übertragungsgeschwindigkeit durchgeführt werden kann und zwischen denen gerade eine Datensignalübertragung mit einer niedrigen /hohen Übertragungsgeschwindigkeit erfolgt - auf die jeweils andere Übertragungsgeschwindigkeit überzugehen.

Im Zusammenhang mit den eingangs betrachteten Verfahren ist auch schon eine Anordnung zur Zweigeschwindigkeits-Vollduplexübertragung bekannt (DE-A-2 748 556). Auch diese bekannte Anordnung gestattet nur zu Beginn des jeweiligen Verbindungsaufbaus zwischen zwei Datenübertragungseinrichtungen die jeweils zu benutzende Übertragungsgeschwindigkeit bzw. Übertragungsrate einzustellen.

Der Erfindung liegt demgemäß die Aufgabe zugrunde, das Verfahren gemäß der eingangs genannten Art so weiterzubilden, daß auch bei Bestehen einer Verbindung zwischen den betrachteten beiden Datenübertragungseinrichtungen ein Übergang von der einen Übertragungsgeschwindigkeit auf die andere Übertragungsgeschwindigkeit ohne weiteres vorgenommen werden kann (wie z. B. aus US-A-3 534 264 bekannt) und daß zugleich in den betreffenden Datenübertragungseinrichtungen enthaltene Entzerrer entsprechend der jeweils gewählten Übertragungsgeschwindigkeit eingestellt werden können.

Gelöst wird die vorstehend aufgezeigte Aufgabe bei einem Verfahren der eingangs genannten Art erfindungsgemäß dadurch, daß der Übergang von der niedrigen Übertragungsgeschwindigkeit auf die hohe Übertragungsgeschwindigkeit dadurch erfolgt, daß von der Datensignale sendenden Datenübertragungseinrichtung auf die Unterbrechung der Abgabe der Datensignale mit der niedrigen Übertragungsgeschwindigkeit hin zunächst ein Steuerzeichen und danach mit der niedrigen Übertragungsgeschwindigkeit eine einen Wunsch zur Änderung der Übertragungsgeschwindigkeit anzeigende Verwürfelungsbitfolge entsprechend einer Verwürfelung einer Folge von "1"-Bits oder "0"-Bits abgegeben wird, woraufhin von der Datensignale empfangenden Datenübertragungseinrichtung auf die Aufnahme dieses Steuerzeichens und der betreffenden Verwürfelungsbitfolge ein entsprechendes Steuerzeichen und eine entsprechende Verwürfelungsbitfolge als Quittierung ihrer Bereitschaft zur Änderung der Übertragungsgeschwindigkeit an die erstgenannte Datenübertragungseinrichtung zurückgesendet wird, welche sodann mit der hohen Übertragungsgeschwindigkeit eine die Einstellung der hohen Übertragungsgeschwindigkeit in der sendenden Datenübertragungseinrichtung vornehmende bzw. anzeigende und in der empfangenden Datenübertragungseinrichtung fordernde entsprechende Verwürfelungsbitfolge aussendet, auf deren Aufnahme in der empfangenden Datenübertragungseinrichtung von dieser eine ihre Einstellung auf die hohe Übertragungsgeschwindigkeit und die Bereitschaft zum Empfang von Datensignalen mit der hohen Übertragungsgeschwindigkeit anzeigende entsprechende Verwürfelungsbitfolge an die genannte sendende Datenübertragungseinrichtung zurückgesandt wird, welche daraufhin Datensignale mit der genannten hohen Übertragungsgeschwindigkeit an die empfangende Datenübertragungseinrichtung aussendet, daß der Übergang von der hohen Übertragungsgeschwindigkeit auf die niedrige Übertragungsgeschwindigkeit dadurch erfolgt, daß von der sendenden Datenübertragungseinrichtung nach Unterbrechung der Datensignalübertragung zunächst ein Steuerzeichen und danach mit der niedrigen Übertragungsgeschwindigkeit eine Verwürfelungsbitfolge entsprechend einer Verwürfelung von einer Folge von "0" oder "1"-Bits an die empfangende Datenübertragungseinrichtung abgegeben wird, daß die empfangende Datenübertragungseinrichtung daraufhin an die sendende Datenübertragungseinrichtung ein entsprechendes Steuerzeichen und danach mit der niedrigen Übertragungsgeschwindigkeit zunächst zur Anzeige ihrer Bereitschaft zur Änderung der Übertragungsgeschwindigkeit eine Verwürfelungsbitfolge entsprechend einer Verwürfelung einer Folge von "1"- oder "0"-Bits und sodann eine Verwürfelungsbitfolge entsprechend der Verwürfelung einer Folge von "0"- oder "1"-Bits zurück überträgt, und daß die sendende Datenübertragungseinrichtung auf die Aufnahme des zuletzt genannten Steuerzeichens und der im Anschluß daran abgegebenen Verwürfelungsbitfolgen hin eine den Wunsch zur Änderung der Übertragungsgeschwindigkeit anzeigende Verwürfelungsbitfolge entsprechend der Verwürfelung einer Folge von "1"- oder "0"-Bits mit der niedrigen Übertragungsgeschwindigkeit an die empfangende Datenübertragungseinrichtung abgibt, die daraufhin eine ihre Einstellung auf die niedrige Übertragungsgeschwindigkeit und die Bereitschaft zum Empfang von Datensignalen mit der niedrigen Übertragungsgeschwindigkeit anzeigende entsprechende Verwürfelungsbitfolge an die sendende Datenübertragungseinrichtung abgibt, welche daraufhin schließlich mit der Übertragung von Datensignalen mit der niedrigen Übertragungsgeschwindigkeit beginnt.

Die Erfindung zeichnet sich durch den Vorteil aus, daß auf relativ einfache Weise bei bestehender Verbindung zwischen den betrachteten beiden Datenübertragungseinrichtungen eine Änderung der Übertragungsgeschwindigkeit von einem niedrigen/hohen Wert auf einen hohen/niedrigen Wert erfolgen kann, wobei zugleich bei jeder Übertragungsgeschwindigkeit sichergestellt ist, daß in den beiden Datenübertragungseinrichtungen enthaltene Entzerrer entsprechend der jeweils gewählten Übertragungsgeschwindigkeit eingestellt werden können.

Zweckmäßigerweise wird als Steuerzeichen jeweils eine aus einer vorgegebenen nichtverwürfelten Bitfolge bestehende Bitgruppe verwendet. Hierdurch ergibt sich der Vorteil, daß die betreffenden Steuerzeichen auf besonders einfache Weise von sonstigen übertragenen Signalen unterschieden werden können.

Anhand von Zeichnungen wird die Erfindung nachstehend beispielsweise näher erläutert.

Fig. 1 zeigt in einem Blockdiagramm ein Datenübertragungssystem, bestehend aus zwei über eine Übertragungsstrecke miteinander verbundenen Datenübertragungseinrichtungen.

Fig. 2 veranschaulicht in einem Zeitdiagramm Verhältnisse, die beim Übergang von einer niedrigen Übertragungsgeschwindigkeit auf eine hohe Übertragungsgeschwindigkeit bei dem in Fig. 1 dargestellten Datenübertragungssystem maßgebend sind.

Fig. 3 veranschaulicht in einem Zeitdiagramm Verhältnisse, die beim Übergang von einer hohen Übertragungsgeschwindigkeit auf eine niedrige Übertragungsgeschwindigkeit bei dem in Fig. 1 dargestellten Datenübertragungssystem maßgebend sind.

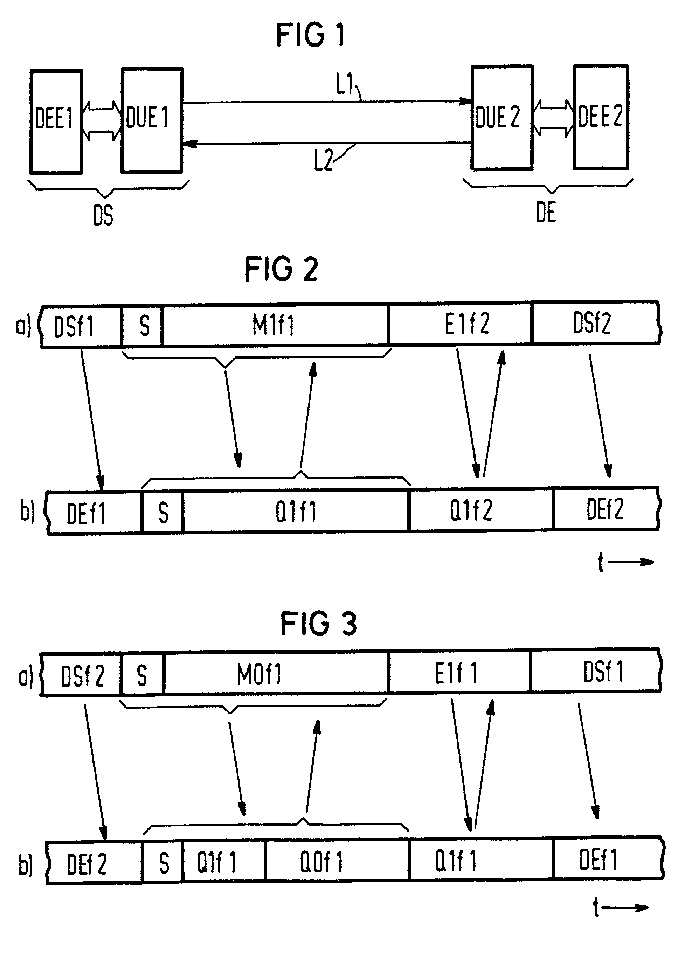

In Fig. 1 ist ein Datenübertragungssystem veranschaulicht, zu dem zwei Datenübertragungseinrichtungen gehören, deren eine als sendende Datenübertragungseinrichtung DS und deren andere als empfangende Datenübertragungseinrichtung DE bezeichnet sei. Mit dieser Bezeichnungsweise soll lediglich zum Ausdruck gebracht werden, daß im vorliegenden Fall von der Datenübertragungseinrichtung DS Datensignale zu der Datenübertragungseinrichtung DE zu übertragen sind.

Die beiden Datenübertragungseinrichtungen DS und DE sind grundsätzlich für eine Duplexübertragung ausgelegt; sie sind demgemäß auch über zwei gesonderte Leitungen bzw. Kanäle L1, L2 miteinander verbunden, die Datensignale jeweils nur in einer Übertragungsrichtung zu übertragen gestatten.

Die beiden Datenübertragungseinrichtungen DS, DE mögen in gleicher Weise aufgebaut sein; sie enthalten jeweils ein Datenendgerät DEE1 bzw. DEE2 und eine Datenübertragungsanordnung DUE1 bzw. DUE2, die insbesondere durch ein Modem gebildet sein mag. Bei einer Ausführungsform der Erfindung können die betreffenden Datenübertragungsanordnungen DUE1, DUE2 jeweils durch ein Modem gebildet sein, welches Datensignale mit einer Übertragungsgeschwindigkeit von 1200 bit/s oder mit einer Übertragungsgeschwindigkeit von 2400 bit/s zu übertragen gestattet.

In dem Zeitdiagramm gemäß Fig. 2 sind die Verhältnisse veranschaulicht, die für den Übergang von einer niedrigen Übertragungsgeschwindigkeit f1 (von z. B. 1200 bit/s) auf eine hohe Übertragungsgeschwindigkeit (von z. B. 2400 bit/s) in dem Datenübertragungssystem gemäß Fig. 1 maßgebend sind. Mit t ist in Fig. 2 die Zeitachse angedeutet. Zunächst wird gemäß Fig. 2a) und 2b) davon ausgegangen, daß von der Datenübertragungseinrichtung DS Datensignale DSf1 mit der niedrigen Übertragungsgeschwindigkeit f1 an die Datenübertragungseinrichtung DE abgegeben werden; in der Datenübertragungseinrichtung DE werden diese Datensignale als Signale DEf1 empfangen. Diese Verhältnisse sind durch einen entsprechenden Pfeil in Fig. 2 angedeutet.

Wenn nun in der Datenübertragungseinrichtung DS der Wunsch besteht, von der niedrigen Übertragungsgeschwindigkeit f1 auf die hohe Übertragungsgeschwindigkeit f2 überzugehen, mit der die beiden Datenübertragungseinrichtungen DS, DE ebenfalls zu arbeiten vermögen, dann unterbricht die Datenübertragungseinrichtung DS zunächst die Übertragung der Datensignale DSf1 und gibt sodann ein Steuerzeichen S und danach eine Verwürfelungsbitfolge M1f1 an die Datenübertragungseinrichtung DE ab. Das Steuerzeichen S mag eine nichtverwürfelte Folge von bestimmten Bits sein, die eine festgelegte Bitgruppe bilden. Die erwähnte Verwürfelungsbitfolge M1f1 entspricht im vorliegenden Fall einer Verwürfelung einer Folge von "1"-Bits. Durch die betreffende Verwürfelungsbitfolge ist dabei sichergestellt, daß ein in der Datenübertragungseinrichtung DE enthaltener Entzerrer entsprechend der Übertragungsgeschwindigkeit f1 eingestellt werden kann.

Das gerade erwähnte Steuerzeichen S und die diesem nachfolgende Verwürfelungsbitfolge M1f1 dienen dazu, der Datenübertragungseinrichtung DE den Wunsch nach Änderung der Übertragungsgeschwindigkeit anzuzeigen. Wenn die Datenübertragungseinrichtung DE diesen Wunsch erkannt hat, sendet sie ein entsprechendes Steuerzeichen S und ein Quittungssignal Q1f1 an die Datenübertragungseinrichtung DS zurück. Das betreffende Quittungssignal Q1f1 besteht aus einer Verwürfelungsbitfolge entsprechend der Verwürfelung einer Folge von "1"-Bits. Auf diese Verwürfelungsbitfolge hin wird ein in der Datenübertragungseinrichtung DS enthältener Entzerrer entsprechend eingestellt.

Erkennt die Datenübertragungseinrichtung DS das zuvor erwähnte Quittungssignal, so gibt sie ein Einstellsignal E1f2 an die Datenübertragungseinrichtung DE ab. Dieses Einstellsignal besteht aus einer Verwürfelungsbitfolge entsprechend der Verwürfelung einer Folge von "1"-Bits. Dieses Einstellsignal wird mit der hohen Übertragungsgeschwindigkeit f2 zu der Datenübertragungseinrichtung DE übertragen.

Erkennt die Datenübertragungseinrichtung DE das betreffende Einstellsignal und nimmt sie eine entsprechende Einstellung für die Übertragungsgeschwindigkeit f2 vor, so sendet sie schließlich ein Quittungssignal Q1f2 mit der hohen Übertragungsgeschwindigkeit f2 an die Datenübertragungseinrichtung DS zurück. Das gerade erwähnte Quittungssignal ist durch eine Verwürfelungsbitfolge gegeben, die der Verwürfelung einer Folge von "1"-Bits entspricht.

Wenn die Datenübertragungseinrichtung DS das zuletzt betrachtete Quittungssignal aufgenommen hat, beginnt sie die Datensignale DSf2 mit der hohen Übertragungsgeschwindigkeit f2 auszusenden. Diese Datensignale werden in der Datenübertragungseinrichtung DE als Datensignale DEf2, also mit der hohen Übertragungsgeschwindigkeit, empfangen.

Nunmehr seien die in Fig. 3 gezeigten Verhältnisse näher betrachtet. Die Fig. 3a veranschaulicht dabei die in der Datenübertragungseinrichtung DS ablaufenden Vorgänge, und die Fig. 3b) veranschaulicht die in der Datenübertragungseinrichtung DE ablaufenden Vorgänge. Auch in Fig. 3 ist die Zeitachse mit t bezeichnet.

Gemäß Fig. 3a) werden zunächst Datensignale DSf2 mit der hohen Frequenz f2 von der Datenübertragungseinrichtung DS abgegeben und in der Datenübertragungseinrichtung DE als Datensignale DEf2 aufgenommen. Wenn nun in der Datenübertragungseinrichtung DS der Wunsch besteht, von der hohen Übertragungsgeschwindigkeit f2 auf die niedrige Übertragungsgeschwindigkeit f1 überzugehen, so unterbricht die Datenübertragungseinrichtung DS zunächst ihre Datensignalübertragung und gibt sodann ein Steuerzeichen S und anschließend das einen Wunsch zur Änderung der Übertragungsgeschwindigkeit anzeigende Meldesignal M0f1 ab, welches durch eine mit der Übertragungsgeschwindigkeit f1 auftretende Verwürfelungsbitfolge entsprechend der Verwürfelung einer Folge von "0"-Bits gegeben ist.

Die Datenübertragungseinrichtung DE quittiert die Aufnahme der gerade betrachteten Signale gemäß Fig. 3b) dadurch, daß sie zunächst ein Steuerzeichen S und danach zwei gesonderte Quittungszeichen bzw. Quittungssignale Q1f1 und Q0f1 jeweils mit der niedrigen Übertragungsgeschwindigkeit f1 abgibt. Das Quittungssignal Q1f1 ist dabei durch eine Verwärfelungsbitfolge entsprechend der Verwürfelung einer Folge von "1"-Bits gegeben, und das Quittungssignal Q0f1 ist durch eine Verwürfelungsbitfolge entsprechend der Verwürfelung einer Folge von "0"-Bits gegeben.

Wenn die Datenübertragungseinrichtung DS die zuletzt betrachteten Quittungssignale ordnungsgemäß aufgenommen und ausgewertet hat, gibt sie ein Einstellsignal E1f1 mit der niedrigen Übertragungsgeschwindigkeit f1 an die Datenübertragungseinrichtung DE ab. Mit diesem Einstellsignal wird die Einstellung der niedrigen Übertragungsgeschwindigkeit in der Datenübertragungseinrichtung DE vorgenommen. Erfolgt diese Einstellung der Übertragungsgeschwindigkeit f1 in der Datenübertragungseinrichtung DE, so gibt diese ein Quittungssignal Q1f1 an die Datenübertragungseinrichtung DS zurück. Sowohl das Quittungssignal Q1f1 als auch das Einstellsignal E1f1 ist jeweils eine mit der niedrigen Übertragungsgeschwindigkeit f1 auftretende Verwürfelungsbitfolge entsprechend einer Folge von "1"-Bits.

Nachdem das Quittungssignal Q1f1 von der Datenübertragungseinrichtung DS ordnungsgemäß aufgenommen und ausgewertet worden ist, kann diese Datenübertragungseinrichtung mit der Übertragung von Datensignalen mit der niedrigen Übertragungsgeschwindigkeit f1 beginnen.

Diese Datensignale sind in Fig. 3a mit DSf1 bezeichnet; sie werden von der Datenübertragungseinrichtung DE als Datensignale DEf1 aufgenommen.

Abschließend sei noch angemerkt, daß die im Zusammenhang mit Fig. 2 und 3 erwähnten Steuerzeichen S jeweils durch zwei nichtverwürfelte Dibits 00 und 11 gebildet sein können, die mit einer Übertragungsgeschwindigkeit von 1200 bit/s abgegeben werden. Die Dauer der betreffenden Steuerzeichen beträgt etwa 100 ms. Die Dauer der Signale M1f1, Q1f1, M0f1 und Q1f1 in Verbindung mit Q0f1 beträgt jeweils z. B. zwischen 500 und 600 ms. Die Dauer der übrigen Einstell- und Quittungssignale beträgt jeweils etwa 200 ms. In diesem Zusammenhang sei noch darauf hingewiesen, daß anstelle der im Zusammenhang mit Fig. 2 und 3 konkret angegebenen Verwürfelungsbitfolgen auch andere Verwürfelungsbitfolgen benutzt werden könnten. Im übrigen sei bemerkt, daß die Anwendung der vorstehend erläuterten Verfahrensweise in Verbindung mit Datenübertragungseinrichtungen, die für diese Verfahrensweise nicht ausgelegt sind, nicht dazu führen wird, daß in diesen Datenübertragungseinrichtungen fehlerhafte Einstellungen auftreten. So wird bei Datenübertragungseinrichtungen, die nach der eingangs erwähnten CCITT-Empfehlung V.22 bis arbeiten, durch die vorstehend beschriebene Verfahrensweise lediglich erreicht, daß die jeweilige Datenübertragung unterbrochen wird und daß eine Datenübertragung mit der niedrigen bzw. zuletzt benutzten Übertragungsgeschwindigkeit anschließend wieder fortgesetzt wird. Dies bedeutet, daß bei den betreffenden Datenübertragungseinrichtungen die im Zusammenhang mit Fig. 2 und 3 erwähnten Verwürfelungsbitfolgen M1f1 und M0f1 lediglich dazu führen, daß bei den betreffenden Datenübertragungseinrichtungen sogenannte retrain-Prozeduren abgewickelt werden.

**Patentansprüche**

1. Verfahren zum Umsteuern der Übertragungsgeschwindigkeit in einem mit zwei voneinander verschiedenen Übertragungsgeschwindigkeiten (f1, f2) betreibbaren Datenübertragungssystem, welches zwei miteinander verbundene Datenübertragungseinrichtungen (DS, DE), insbesondere Modems, umfaßt, dadurch gekennzeichnet, daß der Übergang von der niedrigen Übertragungsgeschwindigkeit (f1) auf die hohe Übertragungsgeschwindigkeit (f2) dadurch erfolgt, daß von der Datensignale sendenden Datenübertragungseinrichtung (DS) auf die Unterbrechung der Abgabe der Datensignale (DSf1) mit der niedrigen Übertragungsgeschwindigkeit (f1) hin zunächst ein Steuerzeichen (S) und danach mit der niedrigen Übertragungsgeschwindigkeit (f1) eine den Wunsch zur Änderung der Übertragungsgeschwindigkeit anzeigende Verwürfelungsbitfolge (M1f1) entsprechend einer Verwürfelung einer Folge von "1"- oder "0"-Bits abgegeben wird, worauf hin von der Datensignale empfangenden Datenübertragungseinrichtung (DE) auf die Aufnahme dieses Steuerzeichens (S) und der betreffenden Verwürfelungsbitfolge (M1f1) ein entsprechendes Steuerzeichen (S) und eine entsprechende Verwürfelungsbitfolge (Q1f1) als Quittierung ihrer Bereitschaft zur Änderung der Übertragungsgeschwindigkeit an die erstgenannte Datenübertragungseinrichtung (DS) zurückgesendet wird, welche sodann mit der hohen Übertragungsgeschwindigkeit (f2) eine die Einstellung der hohen Übertragungsgeschwindigkeit in der sendenden Datenübertragungseinrichtung (DS) vornehmende bzw. anzeigende und in der empfangenden Datenübertragungseinrichtung (DE) fordernde entsprechende Verwürfelungsbitfolge (E1f2) aussendet, auf deren Aufnahme in der empfangenden Datenübertragungseinrichtung (DE) von dieser eine ihre Einstellung auf die hohe Übertragungsgeschwindigkeit (f2) und die Bereitschaft zum Empfang von Datensignalen mit der hohen Übertragungsgeschwindigkeit (f2) anzeigende entsprechende Verwürfelungsbitfolge (Q1f2) an die genannte sendende Datenübertragungseinrichtung (DS) zurückgesendet wird, welche daraufhin Datensignale (DSf2) mit der genannten hohen Übertragungsgeschwindigkeit (f2) an die empfangende Datenübertragungseinrichtung (DE) aussendet,

daß der Übergang von der hohen Übertragungsgeschwindigkeit (f2) auf die niedrige Übertragungsgeschwindigkeit (f1) dadurch erfolgt, daß von der sendenden Datenübertragungseinrichtung (DS) nach Unterbrechung der Datensignalübertragung zunächst ein Steuerzeichen (S) und danach mit der niedrigen Übertragungsgeschwindigkeit (f1) eine den Wunsch zur Änderung der Übertragungsgeschwindigkeit anzeigende Verwürfelungsbitfolge (M0f1) entsprechend der Verwürfelung einer Folge von "0"- oder "1"-Bits an die empfangende Datenübertragungseinrichtung (DE) abgegeben wird,

daß die empfangende Datenübertragungseinrichtung (DE) daraufhin an die sendende Datenübertragungseinrichtung (DS) ein entsprechendes Steuerzeichen (S) und danach mit der niedrigen Übertragungsgeschwindigkeit (f1) zur Anzeige ihrer Bereitschaft zur Änderung der Übertragungsgeschwindigkeit zunächst eine Verwürfelungsbitfolge (Q1f1) entsprechend der Verwürfelung einer Folge von "1"- oder "0"-Bits und sodann eine Verwürfelungsbitfolge (Q0f1) entsprechend der Verwürfelung einer Folge von "0"- oder "1"-Bits zurück überträgt, und daß die sendende Datenübertragungseinrichtung (DS) auf die Aufnahme des zuletzt genannten Steuerzeichens (S) und der im Anschluß daran abgegebenen Verwürfelungsbitfolgen (Q1f1,Q0f1) eine die Einstellung der niedrigen Übertragungsgeschwindigkeit (f1) in der sendenden Datenübertragungseinrichtung (DS) vornehmende bzw. anzeigende und in der empfangenden Datenübertragungseinrichtung (DE) fordernde Verwürfelungsbitfolge (E1f1) entsprechend der Verwürfelung einer Folge von "1"- oder "0"-Bits mit der niedrigen Übertragungsgeschwindigkeit (f1) an die empfangende Datenübertragungseinrichtung (DE) abgibt, die daraufhin eine ihre Einstellung auf die niedrige Übertragungsgeschwindigkeit (f1) und die Bereitschaft zum Empfang von Datensignalen mit der niedrigen Übertragungsgeschwindigkeit (f1) anzeigende entsprechende Verwürfelungsbitfolge (Q1f1) an die sendende Datenübertragungseinrichtung (DS) abgibt, welche daraufhin schließlich mit der Übertragung von Datensignalen (DSf1) mit der niedrigen Übertragungsgeschschwindigkeit (f1) beginnt.

2. Verfahren nach Anspruch 1, dadurch gekennzeichnet, daß als Steuerzeichen (S) jeweils eine aus einer vorgegebenen nicht verwürfelten Bitfolge bestehende Bitgruppe verwendet wird.

**Claims**

1. Method for reversing the transmission speed in a data transmission system which can be operated at one of two different transmission speeds (f1, f2), which comprises two interconnected data transmission devices (DS, DE), particularly modems, characterized in that the transition from the low transmission speed (f1) to the high transmission speed (f2) occurs due to the fact that, following the interruption in the delivery of the data signals (DSf1) at the low transmission speed (f1), first a control character (S) and then, with the low transmission speed (f1), a scrambling bit sequence (M1f1) corresponding to a scrambling of a sequence of "1" or "0" bits, indicating the wish for changing the transmission speed, is delivered by the data transmission device (DS) transmitting the data signals, whereupon, following the acceptance of this control character (S) and the relevant scrambling bit sequence (M1f1), a corresponding control character (S) and a corresponding scrambling bit sequence (Q1f1) is transmitted back to the first-mentioned data transmission device (DS) by the data transmission device (DE) receiving the data signals as acknowledgement of its readiness to change the transmission speed, which firstmentioned data transmission device (DS) then sends out at the high transmission speed (f2) a corresponding scrambling bit sequence (E1f2) performing and indicating the adjustment of the high transmission speed in the transmitting data transmission device (DS) and requesting it in the receiving data transmitting device (DE), following the reception of which in the receiving data transmission device (DE), the latter sends back a corresponding scrambling bit sequence (Q1f2), which indicates its adjustment to the high transmission speed (f2) and the readiness for receiving data signals at the high transmission speed (f2), to the said transmitting data transmission device (DS) which thereupon sends out data signals (DSf2) to the receiving data transmission device (DE) at the said high transmission speed (f2),

that the transition from the high transmission speed (f2) to the low transmission speed (f1) occurs due to the fact that, after interruption of the data signal transmission, first a control character (S) and then, with the low transmission speed (f1) a scrambling bit sequence (M0f1) corresponding to the scrambling of the sequence of "0" or "1" bits, which indicates the wish for changing the transmission speed, is delivered to the receiving data transmission device (DE) by the transmitting data transmission device (DS),

that the receiving data transmission device (DE) thereupon transmits back to the transmitting data transmission device (DS) a corresponding control character (S) and thereafter, with the low transmission speed (f1), first a scrambling bit sequence (Q1f1) corresponding to the scrambling of a sequence of "1" or "0" bits and then a scrambling bit sequence (Q0f1) corresponding to the scrambling of a sequence of "0" or "1" bits for indicating readiness to change the transmission speed,

and that the transmitting data transmission device (DS), following the reception of the last-mentioned control character (S) and the scrambling bit sequences (Q1f1, Q0f1), delivered thereafter, delivers a scrambling bit sequence (E1f1) corresponding to the scrambling of a sequence of "1" or "0" bits, performing and indicating the adjustment of the low transmission speed (f1) in the transmitting data transmission device (DS) and requesting it in the receiving data transmission device (DE), to the receiving data transmission device (DE) at the low transmission speed (f1) which thereupon delivers a corresponding scrambling bit sequence (Q1f1), which indicates its adjustment to the low transmission speed (f1) and the readiness to receive data signals at the low transmission speed (f1), to the transmitting data transmission device (DS) which thereupon, finally, begins with the transmission of data signals (DSf1) at the low transmission speed (f1).

2. Method according to Claim 1, characterized in that a bit group consisting of a predetermined nonscrambled bit sequence is in each case used as control character (S).


**Revendications**

1. Procédé pour changer la vitesse de transmission dans un système de transmission de données, qui peut fonctionner avec deux vitesses différentes de transmission (f1, f2) et comporte deux dispositifs de transmission de données (DS, DE), notamment des modems, reliés entre eux, caractérisé par le fait que le passage de la faible vitesse de transmission (f1) à la vitesse élevée de transmission (f2) est réalisée par le fait que, lors de l'interruption de la délivrance des signaux de données (DSf1) avec la faible vitesse de transmission (f1), le dispositif de transmission de données (DS), qui envoie des signaux de données, envoie tout d'abord un signal de commande (S) et ensuite, avec la faible vitesse de transmission (f1), une suite de bits de codage (M1f1), indiquant le désir de changement de la vitesse de transmission, conformément à un codage d'une suite de bits "1" ou "0", à la suite de quoi, lors de la réception de ce signal de commande (S) et de la suite considérée de bits de codage (M1f1), le dispositif de transmission de données (DE), qui reçoit des signaux de données, renvoie un signal de commande correspondant (S) et une suite correspondante de bits de codage (Q1f1), pour signaler son état prêt pour le changement de la vitesse de transmission, au dispositif de transmission de données (DS), mentionné en premier lieu, qui émet alors, avec la vitesse élevée de transmission (f2), une suite correspondante de bits de codage (E1f2), qui réalise ou indique le réglage de la vitesse élevée de transmission dans le dispositif de transmission de données (DS), effectuant l'émission, et déclenche une activation dans le dispositif de transmission de données (DE), effectuant la réception, et lors de la réception de laquelle, dans le dispositif de transmission de données (DE) effectuant la réception, ce dispositif renvoie une suite correspondante de bits de codage (Q1f2), qui indique son réglage sur la vitesse élevée de transmission (f2) et son état prêt à la réception de signaux de données avec la vitesse élevée de transmission (f2), audit dispositif de transmission de données (DS), effectuant la réception, qui envoie, alors, des signaux de données (DSf2) avec ladite vitesse élevée de transmission (f2), au dispositif de transmission de données (DE), effectuant la réception,

que le passage de la vitesse élevée de transmission (f2) à la faible vitesse de transmission (f1) est réalisé grâce au fait qu'après l'interruption de la transmission de signaux de données, le dispositif de transmission de données (DS), effectuant l'émission, envoie tout d'abord un signal de commande (S), puis, avec la faible vitesse de transmission (f1), une suite de bits de codage (M0f1), qui indique le désir de changer la vitesse de transmission, au dispositif de transmission de données (DE) effectuant la réception, conformément au codage d'une suite de bits "0" ou "1",

que le dispositif de transmission de données (DE), effectuant la réception, renvoie alors, au dispositif de transmission de données (DS), effectuant l'émission, un signal de commande correspondant (S), puis, avec la faible vitesse de transmission (f1), en vue de l'affichage de son état prêt pour le changement de la vitesse de transmission, tout d'abord une suite de bits de codage (Q1f1), conformément au codage d'une suite de bits "1" ou "0", puis une suite de bits de codage (Q0f1), conformément au codage d'une suite de bits "0" ou "1",

et que, lors de la réception du signal de commande (S) indiqué en dernier lieu et des suites de bits de codage (Q1f1, Q0f1), envoyées à la suite de ce signal, le dispositif de transmission de données (DS), effectuant l'émission, envoie une suite de bits de codage (E1f1), qui exécute ou indique le réglage de la faible vitesse de transmission (f1) dans le dispositif de transmission de données (DS), effectuant l'émission, et déclenche une activation dans le dispositif de transmission de données (DE), effectuant la reception, conformément au codage d'une suite de bits "1" ou "0", avec la faible vitesse de transmission (f1) au dispositif de transmission de données (DE), effectuant la réception, qui envoie alors une suite correspondante de bits de codage (Q1f1), qui indique son réglage sur la faible vitesse de transmission (f1) et son état prêt pour la réception de signaux de données avec la faible vitesse de transmission (f1), au dispositif de transmission de donnees (DS), effectuant l'émission, qui, alors, commence finalement à effectuer la transmission de signaux de données (DSf1) avec la faible vitesse de transmission de données.

2. Procédé suivant la revendication 1, caractérisé par le fait qu'on utilise, comme signal de commande (S), respectivement un groupe de bits constitué par une suite prédéterminée, non codée, de bits.

# FIG 1

| DEE1 | ⟷ | DUE 1 |

L1 ⟶

⟵ L2

| DUE 2 | ⟷ | DEE 2 |

DS

DE

# FIG 2

a) | DSf1 | S | M1f1 | E1f2 | DSf2 |

b) | DEf1 | S | Q1f1 | Q1f2 | DEf2 |

t ⟶

# FIG 3

a) | DSf2 | S | M0f1 | E1f1 | DSf1 |

b) | DEf2 | S | Q1f1 | Q0f1 | Q1f1 | DEf1 |

t ⟶